# EUROPÄISCHE PATENTSCHRIFT

(11) **EP 3 287 664 B1**
(45) Veröffentlichungstag und Bekanntmachung des Hinweises auf die Patenterteilung: **23.09.2020**
(21) Anmeldenummer: 17182777.7
(22) Anmeldetag: 24.07.2017
(51) Int. Cl.: F16H 3/54, B60K 17/346

(54) **ZWEISTUFIGER PLANETENTRIEB FÜR EIN VERTEILERGETRIEBE UND VERTEILERGETRIEBE**
TWO-STAGE PLANETARY GEAR FOR A TRANSFER CASE AND TRANSFER CASE
ENTRAÎNEMENT PLANÉTAIRE À DEUX ÉTAGES POUR UNE BOÎTE DE TRANSFERT ET BOÎTE DE TRANSFERT

(30) Priorität: 26.08.2016 DE 102016216120
(43) Veröffentlichungstag der Anmeldung: 28.02.2018
(73) Patentinhaber: ZF Friedrichshafen AG, 88046 Friedrichshafen (DE)
(72) Erfinder: Brilka, Tobias, 94034 Passau (DE); Reitinger, Franz, 4092 Esternberg (AT)
(74) Vertreter: ZF Friedrichshafen AG

(56) Entgegenhaltungen:
- EP-A2- 0 925 986
- US-A- 4 920 828

## Beschreibung

Die Erfindung betrifft eine Gesamtheit aus einem Antriebsrad und einem zweistufigen Planetentrieb für ein Verteilergetriebe eines Kraftfahrzeugs gemäß dem Oberbegriff von Anspruch 1 sowie ein Verteilergetriebe gemäß dem Oberbegriff von Anspruch 8.

Im Stand der Technik sind zweistufige Verteilergetriebe bekannt, welche üblicherweise für ein mit mehr als zwei angetriebenen Antriebsrädern, beispielsweise ein vierradgetriebenes ermöglichen dabei z.B. oftmals die Realisierung eines Geländegangs neben einem Straßengang. Derartige zweistufige Verteilergetriebe sind dabei in der Regel in Vorgelegebauweise ausgeführt, was eine relativ kostengünstige, vielfach bewährte und gleichermaßen technisch einfache Lösung darstellt. Darüber hinaus sind aber auch zweistufige Verteilergetriebe in Planetenbauweise bekannt, welche gegenüber den in Vorgelegebauweise ausgebildeten Verteilergetrieben den Vorteil einer axial vergleichsweise raumsparenden Bauweise aufweisen.

In diesem Zusammenhang offenbart die DE 10 2011 086 061 A1 ein Verteilergetriebe mit einer Antriebswelle und einer ersten und zweiten Abtriebswelle, mit einer Schalteinrichtung zum Schalten eines Straßen- und eines Geländeganges und mit einem als Differenzialgetriebe wirkenden Planetengetriebe sowie mit einem als Schaltgetriebe wirkenden Planetengetriebe, deren Planetenträger drehfest miteinander verbunden sind. Im Straßengang ist die Schalteinrichtung so geschaltet, dass das als Gangschaltgetriebe wirkende Planetengetriebe als Block umläuft, wobei die Zahnräder in diesem Planetengetriebe nicht aneinander abwälzen.

Aus der DE 101 63 071 A1 ist ein schaltbares Planetengetriebe bekannt, welches koaxial zwischen einer Eingangswelle und einem anzutreibenden Rad, insbesondere einem Getrieberad, angeordnet ist, wobei das Rad an einem stationären Teil axial und radial gelagert ist. Das Planetengetriebe gemäß der DE 101 63 071 A1 umfasst ein konzentrisch im anzutreibenden Rad angeordnetes und mit der Eingangswelle drehfest verbundenes Sonnenrad. Weiterhin umfasst das Planetengetriebe einen relativ zum anzutreibenden Rad drehfesten und zusammen mit allen Planetenrädern axial zwischen zwei Endlagen verschiebbaren Planetenträger sowie ein axial mit dem Planetenträger zwangsgekoppeltes Hohlrad. Zwischen dem Sonnenrad bzw. einer Eingangswelle und dem Planetenträger ist eine erste Kupplung angeordnet, welche in einer axialen Endlage von Planetenträger und Hohlrad schließt und bei Verlassen der Endlage öffnet. Eine zweite Kupplung ist zwischen dem Hohlrad und dem stationären Teil angeordnet, wobei die zweite Kupplung in der anderen axialen Endlage von Planetenträger und Hohlrad schließt und bei Verlassen der dieser Endlage öffnet.

Die bekannten zweistufigen Verteilergetriebe sind jedoch dahingehend nachteilbehaftet, als dass die in Vorgelegebauweise ausgebildeten zweistufigen Verteilergetriebe axial einen vergleichsweise großen Bauraumbedarf aufweisen. In verschiedensten Anwendungsfällen, wie z.B. in Kränen oder Sonderfahrzeugen, lassen sich auf Grund der dort üblicherweise beengten Platzverhältnisse derartige in Vorgelegebauweise ausgebildete zweistufige Verteilergetriebedeshalb nur schwer oder gar nicht verwenden. Die bekannten Verteilergetriebe, welche in Planetenbauweise ausgebildet sind, weisen demgegenüber den Nachteil auf, dass bei einem Schaltvorgang eine vergleichsweise große Masse verschoben werden muss. Dies erfordert hohe Schaltungskräfte und kann zu Verzögerungen in den Schaltvorgängen führen.

Die EP 0925986 A2 offenbart eine Gesamtheit aus einem Antriebsrad und einem zweistufigen Planetentrieb gemäß dem Oberbegriff des Anspruchs 1.

Es ist eine Aufgabe der vorliegenden Erfindung, eine verbesserte Gesamtheit aus einem Antriebsrad und einem zweistufigen Planetentrieb für ein Verteilergetriebe vorzuschlagen.

Diese Aufgabe wird erfindungsgemäß durch eine Gesamtheit gemäß Anspruch 1 gelöst. Vorteilhafte Ausgestaltungen und Weiterbildungen der Erfindung gehen aus den abhängigen Ansprüchen hervor.

Daraus ergibt sich gegenüber den bekannten, in Vorgelegebauweise ausgebildeten Verteilergetrieben der Vorteil, dass ein Verteilergetriebe, welches den erfindungsgemäßen Planetentrieb aufweist, axial vergleichsweise kompakt ausgebildet sein kann. Gegenüber den bekannten in Planetenbauweise ausgebildeten Verteilergetrieben ergibt sich der Vorteil, dass nicht die vergleichsweise große Masse des Planetenträgers mitsamt den Planetenrädern verschoben werden muss. Stattdessen wird erfindungsgemäß ausschließlich die Schaltmuffe axial verschoben. Die Schaltmuffe ist gegenüber dem Planetenträger mit den Planetenrädern jedoch vergleichsweise leichtgewichtig ausgebildet. Somit können Schaltvorgänge verzögerungsfrei ausgeführt werden und die notwendigerweise bereitzustellenden Schaltkräfte können geringer ausgelegt sein. Die erste Endlage der Schaltmuffe bildet dabei bevorzugt eine erste Gangstufe des zweistufigen Planetentriebs. Die zweite Endlage der Schaltmuffe bildet entsprechend die zweite Gangstufe des zweistufigen Planetentriebs. Die erste Gangstufe des Planetentriebs kann beispielsweise als Geländegang des Kraftfahrzeugs ausgebildet sein, wohingegen die zweite Gangstufe des Planetentriebs als Straßengang ausgebildet sein kann. Das Verschieben von Getrieberädern, wie beispielsweise der Schaltmuffe hat sich in zahlreichen Anwendungsfällen bewährt und als sehr robust erwiesen.

Ein Schaltvorgang von einer der beiden bereitgestellten Gangstufen des zweistufigen Planetentriebs in die jeweils andere Gangstufe erfolgt also durch axiales Verschieben der Schaltmuffe von der ersten in die zweite Endlage bzw. umgekehrt. Der Planetentrieb ist bevorzugt sowohl axial als auch radial vollständig innerhalb eines Antriebsrads angeordnet. Je nach spezifischem Anwendungsfall kann es alternativ bevorzugt vorgesehen sein, dass der Planetentrieb in einer Richtung axial aus dem Antriebsrad herausragt, also ausschließlich radial vollständig innerhalb des Antriebsrads des Kraftfahrzeugs angeordnet ist.

Unter dem Begriff Antriebsrad wird im Sinne der Erfindung ein Zahnrad verstanden, welches ein in das Verteilergetriebe bzw. den Planetentrieb eingeleitetes Drehmoment wieder ausgibt.

Ein Verteilergetriebe mit dem erfindungsgemäßen Planetentrieb wird bevorzugt trieblich hinter einem Schaltgetriebe oder einem Automatikgetriebe derart angeordnet, dass er ein Antriebsmoment auf zwei Fahrzeugachsen, beispielsweise eine Vorder- und eine Hinterachse, verteilen kann. Durch den erfindungsgemäßen Planetentrieb ist das Verteilergetriebe in verschiedene Übersetzungen schaltbar.

Bevorzugt ist es vorgesehen, dass die Planetenräder sowohl axial als auch radial auf dem Planetenträger gelagert sind.

Gemäß einer bevorzugten Ausführungsform der Erfindung ist es vorgesehen, dass das Sonnenrad eine erste Verzahnung und eine davon axial beabstandete zweite Verzahnung aufweist, wobei das Sonnenrad über die erste Verzahnung mit den Planetenrädern in permanentem Eingriff steht und über die zweite Verzahnung mit der Schaltmuffe koppelbar ist. Somit ist das Sonnenrad auf einfache Weise befähigt, mit der Schaltmuffe eine drehfeste Verbindung herzustellen, wobei der Eingriff mit den Planetenrädern hiervon unberührt bleibt. Bevorzugt handelt es sich bei der Verbindung bzw. Kopplung zwischen dem Sonnenrad und der Schaltmuffe um eine formschlüssige Verbindung, indem die zweite Verzahnung des Sonnenrads als formschlüssige Gegenverzahnung zur entsprechenden Verzahnung der Schaltmuffe ausgebildet ist. Indem die Schaltmuffe axial verschiebbar angeordnet ist, kann sie auf die zweite Verzahnung des Sonnenrads geschoben werden, um auf diese Weise die Kopplung herzustellen. Die zweite Verzahnung des Sonnenrads und die entsprechende Verzahnung der Schaltmuffe stellen somit eine erste Kupplung dar, die im geschlossenen Zustand die drehfeste Verbindung herstellt und im geöffneten Zustand eine Verdrehbarkeit des Sonnenrads gegenüber der Schaltmuffe zulässt. Sofern bei geschlossener erster Kupplung über die Eingangswelle eine Eingangsdrehzahl in den Planetentrieb eingeleitet wird, kann diese Eingangsdrehzahl durch das drehfest gehaltene Sonnenrad untersetzt werden und über den Planetenträger als Ausgangsdrehzahl wieder bereitgestellt werden. Diese erste Endlage kann beispielsweise dem Geländegang entsprechen.

Gemäß Anspruch 1 ist es vorgesehen, dass das Sonnenrad drehbar auf der Eingangswelle gelagert ist. Da die Schaltmuffe drehfest auf der Eingangswelle angeordnet ist, kann das Sonnenrad im von der Schaltmuffe entkoppelten Zustand, d.h. wenn die Schaltmuffe sich nicht in der ersten Endlage befindet, frei gegenüber der Eingangswelle drehen. Dies ermöglicht z.B. einen Leerlauf des Planetentriebs bzw. einen Stillstand des Planetentriebs in der Neutralposition.

Gemäß einer weiteren bevorzugten Ausführungsform der Erfindung ist es vorgesehen, dass der Planetenträger eine Verzahnung aufweist, wobei der Planetenträger über die Verzahnung mit der Schaltmuffe koppelbar ist. Somit ist auch der Planetenträger auf einfache Weise befähigt, mit der Schaltmuffe eine drehfeste Verbindung herzustellen. Bevorzugt handelt es sich bei der Verbindung bzw. Kopplung zwischen dem Planetenträger und der Schaltmuffe ebenfalls um eine formschlüssige Verbindung, welche dadurch realisiert wird, dass die Verzahnung des Planetenträgers als formschlüssige Gegenverzahnung zur entsprechenden Verzahnung der Schaltmuffe ausgebildet ist. Indem die Schaltmuffe axial verschiebbar angeordnet ist, kann sie auf die Verzahnung des Planetenträgers geschoben werden, um auf diese Weise die Kopplung herzustellen. Die Verzahnung des Planetenträgers und die entsprechende Verzahnung der Schaltmuffe stellen somit eine zweite Kupplung dar, die im geschlossenen Zustand die drehfeste Verbindung herstellt und im geöffneten Zustand eine Verdrehbarkeit des Planetenträgers gegenüber der Schaltmuffe zulässt.

Bei geschlossener zweiter Kupplung wird die Eingangsdrehzahl der Eingangswelle direkt auf den Planetenträger übertragen, womit das Sonnenrad frei kraftlos umläuft, d.h., die Eingangsdrehzahl entspricht der Ausgangsdrehzahl. Diese zweite Endlage kann beispielsweise dem Straßengang entsprechen.

Bevorzugt ist es vorgesehen, dass die Schaltmuffe zur Kopplung mit dem Sonnenrad und dem Planetenträger jeweils Innenverzahnungen aufweist und das Sonnenrad sowie der Planetenträger entsprechend jeweils Außenverzahnungen zur Kopplung mit der Schaltmuffe aufweisen. Alternativ bevorzugt kann die Schaltmuffe jedoch auch Außenverzahnungen aufweisen, so dass das Sonnenrad und der Planetenträger entsprechend Innenverzahnungen aufweisen. Auch eine Ausbildung der Schaltmuffe mit einer Innenverzahnung und einer Außenverzahnung zur Kopplung mit dem Sonnenrad bzw. Planetenträger ist denkbar. Ebenso ist die Anwendung von Klauenverzahnungen alleine oder in unterschiedlichen Kombinationen mit anderen Verzahnungsarten möglich. Insbesondere bei vergleichswiese kleinen Getrieben, welche vergleichsweise geringere Momente übertragen, können auch Lamellenkupplungen verwendet werden.

Gemäß einer weiteren bevorzugten Ausführungsform der Erfindung ist es vorgesehen, dass die Schaltmuffe axial zwischen der ersten Endlage und der zweiten Endlage in eine Neutralposition verschiebbar ist.

Diese Neutralposition stellt also eine dritte einnehmbare Axialposition der Schaltmuffe dar. In der Neutralposition ist die Schaltmuffe weder mit dem Planetenträger noch mit dem Sonnenrad gekoppelt, entsprechend sind sowohl die erste Kupplung als auch die zweite Kupplung geöffnet. Der Planetentrieb befindet sich damit im Leerlauf. In diesem Betriebszustand des Planetentriebs wird beispielsweise ein Abschleppvorgang des Kraftfahrzeugs begünstigt oder aber der Betrieb eines Nebenabtriebs im Stillstand des Kraftfahrzeugs ermöglicht.

Gemäß einer weiteren bevorzugten Ausführungsform der Erfindung ist es vorgesehen, dass der Planetenträger axialfest und drehfest mit einem Antriebsrad verbunden ist. Der Planetenträger und das Antriebsrad können dabei entweder einstückig ausgebildet sein oder aber mittels geeigneter Verbindungsmittel axialfest und drehfest miteinander verbunden sein. Bei einer einstückigen Ausbildungsweise ergibt sich eine besonders robuste und zuverlässige Verbindung. Zudem kann eine derartige Ausbildungsweise vergleichsweise leichtgewichtig ausgebildet sein, da die drehfest Verbindungsschnittstellen des Planetenträgers und des Antriebsrads nicht verstärkt werden müssen. Vorteilhaft entfallen in diesem Fall auch die Verbindungsmittel. Durch diese Verbindung des Planetenträgers mit dem Antriebsrad ergibt sich vorteilhafterweise zudem eine sehr robuste Lagerung des Planetenträgers.

Bevorzugt ist es vorgesehen, dass der Planetenträger über ein geeignetes Übertragungselement mit dem Antriebsrad verbunden ist.

Gemäß einer weiteren bevorzugten Ausführungsform der Erfindung ist es vorgesehen, dass die Schaltmuffe eine erste Verzahnung, eine zweite Verzahnung und eine dritte Verzahnung aufweist, wobei die Schaltmuffe über die erste Verzahnung drehfest mit dem Sonnenrad koppelbar ist, wobei die Schaltmuffe über die zweite Verzahnung drehfest mit dem Planetenträger koppelbar ist und wobei die Schaltmuffe über die dritte Verzahnung drehfest mit der Eingangswelle gekoppelt ist. Somit kann über entsprechende Gegenverzahnungen des Sonnenrads und des Planetenträgers, wie beschrieben, die erste Kupplung zwischen Sonnenrad und Schaltmuffe und die zweite Kupplung zwischen Planetenträger und Schaltmuffe realisiert werden. Die dritte Verzahnung garantiert einerseits eine zuverlässige und robuste Drehfestigkeit der Verbindung zur Eingangswelle, ermöglicht andererseits aber auch eine axiale Verschiebbarkeit der Schaltmuffe auf der Eingangswelle.

Gemäß einer weiteren bevorzugten Ausführungsform der Erfindung ist es vorgesehen, dass das Hohlrad drehfest und axialfest mit einem Getriebegehäuse gekoppelt ist. Somit ist das Hohlrad zuverlässig gelagert.

Besonders bevorzugt ist es vorgesehen, dass das Hohlrad und das Getriebegehäuse einstückig ausgebildet sind.

Die Erfindung betrifft weiterhin ein Verteilergetriebe, umfassend mindestens einen erfindungsgemäßen Planetentrieb. Daraus ergeben sich die bereits im Zusammenhang mit dem Planetentrieb genannten Vorteile auch für das erfindungsgemäße Verteilergetriebe.

Gemäß einer bevorzugten Ausführungsform der Erfindung ist es vorgesehen, dass der mindestens eine Planetentrieb über mindestens eine Zwischenwelle in Triebverbindung mit einem Differentialgetriebe des Verteilergetriebes steht. Alternativ ist auch eine Ausführungsform ohne Zwischenwelle möglich.

bevorzugt verteilt das Differentialgetriebe ein Drehmoment bzw. eine Drehzahl zwischen mindestens zwei Achsen.

Weiterhin ist es bevorzugt, dass das Differentialgetriebe in Kraftflussrichtung nach dem Planetentrieb angeordnet ist. Somit kann eine vom erfindungsgemäßen Gegentrieb bereitgestellte Ausgangsdrehzahl bzw. ein bereitgestelltes Ausgangsdrehmoment über das Differentialgetriebe weiter verteilt werden.

Die Zwischenwelle ermöglicht bzw. die Zwischenwellen ermöglichen dabei einerseits eine größere räumliche Beabstandung des Planetentriebs vom Differentialgetriebe und andererseits eine Drehrichtungsumkehr.

Die Ausgangsdrehzahl bzw. das Ausgangsdrehmoment werden am Planetentrieb bevorzugt über den Planetenträger bereitgestellt.

Nachfolgend wird die Erfindung anhand von in den Figuren dargestellten Ausführungsformen beispielhaft erläutert.

Es zeigt:

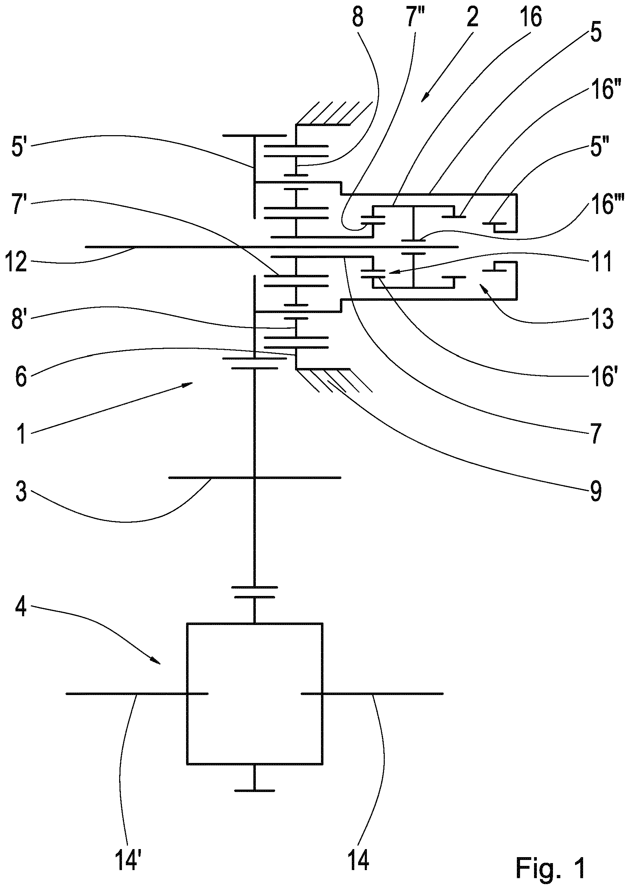

- Fig. 1: schematisch und beispielhaft eine mögliche Ausbildungsform eines erfindungsgemäßen Verteilergetriebes.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt schematisch und beispielhaft eine mögliche Ausbildungsform eines erfindungsgemäßen Verteilergetriebes 1. Das Verteilergetriebe 1 umfasst einen erfindungsgemäßen Planetentrieb 2, eine Zwischenwelle 3 und ein Differentialgetriebe 4. Der Planetentrieb 2 wiederum umfasst seinerseits einen Planetenträger 5, ein Hohlrad 6, ein Sonnenrad 7, eine Eingangswelle 12, eine auf der Eingangswelle 12 axial verschieblich angeordnete Schaltmuffe 16 sowie beispielsgemäß zwei Planetenräder 8 und 8'. Der Planetentrieb 2 ist dabei in einem Getriebegehäuse 9 angeordnet, welches in der Darstellung der Fig. 1 nur ansatzweise zu sehen ist. Das Sonnenrad 7 ist axialfest, aber drehbar, auf der Eingangswelle 12 gelagert und verfügt über eine erste Verzahnung 7' und eine zweite Verzahnung 7". Über die erste Verzahnung 7' steht das Sonnenrad 7 mit den Planetenrädern 8 und 8' in Eingriff. Über die zweite Verzahnung 7" ist das Sonnenrad 7 mit der Schaltmuffe 16 koppelbar. Die Schaltmuffe 16 verfügt über eine erste Verzahnung 16', eine zweite Verzahnung 16" sowie eine dritte Verzahnung 16'". Über die erste Verzahnung 16' ist die Schaltmuffe 16 mit dem Sonnenrad 7 koppelbar, wobei die erste Verzahnung 16' der Schaltmuffe 16 und die zweite Verzahnung 7" des Sonnenrads 7 als erste Kupplung 11 zusammenwirken. Bei der ersten Kupplung 11 handelt es sich um eine Formschlusskupplung, da die erste Verzahnung 16' der Schaltmuffe 16 und die zweite Verzahnung 7" des Sonnenrads 7 formschlüssig ineinander greifen. Über die zweite Verzahnung 16" ist die Schaltmuffe 16 zudem mit dem Planetenträger 5 koppelbar, wobei in diesem Fall die zweite Verzahnung 16' der Schaltmuffe 16 und eine Verzahnung 5" des Planetenträgers 5 als formschlüssige zweite Kupplung 13 zusammenwirken. Auch bei der zweiten Kupplung 13 handelt es sich um eine Formschlusskupplung, da die zweite Verzahnung 16" der Schaltmuffe 16 und die Verzahnung 5" des Planetenträgers 5 ebenfalls formschlüssig ineinander greifen können. Über die dritte Verzahnung 16'" schließlich ist die Schaltmuffe 16 drehfest, aber axial verschieblich, auf der Eingangswelle angeordnet. Beispielsgemäß kann die Schaltmuffe dabei drei Positionen einnehmen, wobei in einer ersten Endlage der Schaltmuffe 16, welche in der Fig. 1 dargestellt ist, die erste Kupplung 11 geschlossen ist. In einer zweiten Endlage der Schaltmuffe 16 (nicht dargestellt), ist die zweite Kupplung 13 geschlossen und in einer Neutralstellung, welche der axialen Mittelposition zwischen der ersten und der zweiten Endlage entspricht, sind beide Kupplungen 11 und 13 geöffnet.

Wie bereits beschrieben, besteht also in der ersten Endlage der Schaltmuffe 16 eine drehfeste Verbindung der Schaltmuffe 16 mit dem Sonnenrad 7. Eine über die Eingangswelle 12 eingeleitete Eingangsdrehzahl kann somit durch den Planetenrieb 2 untersetzt und über den Planetenträger 5, bzw. das Antriebsrad 5' wieder abgegeben werden. In der Endlage der Schaltmuffe 16 (welche in Fig. 1 jedoch nicht dargestellt ist) ist die Schaltmuffe 16 beispielsgemäß über die zweite Kupplung 13 drehfest mit dem Planetenträger 5 gekoppelt. In dieser zweiten Endlage der Schaltmuffe 16 wird eine über die Eingangswelle 12 eingeleitete Eingangsdrehzahl direkt auf den Planetenträger 5 übertragen, so dass über den Planetenträger 5, bzw. das Antriebsrad 5' eine zur Eingangsdrehzahl identische Ausgangsdrehzahl wieder abgegeben wird. Weiterhin kann die Schaltmuffe 16 die bereits beschriebene Neutralposition einnehmen, welche axial zwischen der ersten Endlage und der zweiten Endlage liegt. In dieser Neutralposition ist die Schaltmuffe 16 weder mit Planetentrieb 5 gekoppelt noch mit dem Sonnenrad 7 gekoppelt. In dieser Neutralposition wird eine Eingangsdrehzahl der Eingangswelle 12 nicht auf das Antriebsrad 5' übertragen. Für einen Schaltvorgang des in Fig. 1 beispielhaft gezeigten Planetentriebs 2 muss also ausschließlich die Schaltmuffe 16 von der ersten in die zweite Endlage bzw. in die Neutralposition geschaltet werden. Da die Schaltmuffe 16 alleine vergleichsweise leichtgewichtig ist, müssen über die Schaltaktuatorik keine besonderen Schaltkräfte bereitgestellt werden. Ebenso ergeben sich durch die vergleichsweise geringe zu bewegende Masse bei einem Schaltvorgang auch vergleichsweise kurze und schnelle Schaltzeiten.

Wie in Figur 1 weiterhin zu sehen ist, treibt der Planetenträger 5 bzw. das Antriebsrad 5' auch die Zwischenwelle 3 bzw. ein auf der Zwischenwelle 3 gelagertes Zwischenrad 3' an. Die Zwischenwelle 3 bzw. das Zwischenrad 3' treiben nun ihrerseits das Differentialgetriebe 4 an. Das Differentialgetriebe 4 ist beispielsgemäß als Planetendifferentialgetriebe ausgebildet. Es ermöglicht über seine Abtriebswellen 14 und 14' die Verteilung eines Abtriebsdrehmoments bzw. einer Abtriebsdrehzahl. Beispielsgemäß treibt die Abtriebswelle 14 dabei eine Vorderachse des Kraftfahrzeugs an, während die Abtriebswelle 14' eine Hinterachse des Kraftfahrzeugs antreibt.

### Bezugszeichen

- 1: Verteilergetriebe
- 2: Planetenrieb
- 3: Zwischenwelle
- 3': Zwischenrad
- 4: Differentialgetriebe
- 5: Planetenträger
- 5': Antriebsrad
- 5": Verzahnung des Planetenträgers
- 6: Hohlrad
- 7: Sonnenrad
- 7': erste Verzahnung des Sonnenrads
- 7": zweite Verzahnung des Sonnenrads
- 8, 8': Planetenrad
- 9: Getriebegehäuse
- 11: erste Kupplung
- 12: Eingangswelle
- 13: zweite Kupplung
- 14, 14': Abtriebswelle
- 16: Schaltmuffe
- 16': erste Verzahnung der Schaltmuffe
- 16": zweite Verzahnung der Schaltmuffe
- 16'": dritte Verzahnung der Schaltmuffe

## Patentansprüche

1. Gesamtheit aus einem Antriebsrad (5') und einem zweistufigen Planetentrieb (2) für ein Verteilergetriebe (1) eines Kraftfahrzeugs, der Planetentrieb (2) umfassend eine Eingangswelle (12), einen Planetenträger (5) mit Planetenrädern (8, 8'), ein Hohlrad (6), ein Sonnenrad (7) und eine axial verschiebbare Schaltmuffe (16), wobei die Schaltmuffe (16) drehfest mit der Eingangswelle (12) gekoppelt ist, wobei die Schaltmuffe (16) in einer ersten Endlage die Eingangswelle (12) drehfest mit dem Sonnenrad (7) koppelt und in einer zweiten Endlage die Eingangswelle (12) drehfest mit dem Planetenträger (5) koppelt, **dadurch gekennzeichnet, dass** das Sonnenrad (7) drehbar auf der Eingangswelle (12) gelagert und der Planetentrieb (2) konzentrisch innerhalb des Antriebsrads (5) angeordnet ist.

2. Gesamtheit nach Anspruch 1,
**dadurch gekennzeichnet, dass** das Sonnenrad (7) eine erste Verzahnung (7') und eine davon axial beabstandete zweite Verzahnung (7") aufweist, wobei das Sonnenrad (7) über die erste Verzahnung (7') mit den Planetenrädern (8, 8') in permanentem Eingriff steht und über die zweite Verzahnung (7") mit der Schaltmuffe (16) koppelbar ist.

3. Gesamtheit nach mindestens einem der Ansprüche 1 und 2,
**dadurch gekennzeichnet, dass** der Planetenträger (5) eine Verzahnung (5") aufweist, wobei der Planetenträger (5) über die Verzahnung (5") mit der Schaltmuffe (16) koppelbar ist.

4. Gesamtheit nach mindestens einem der Ansprüche 2 und 3,
**dadurch gekennzeichnet, dass** die Schaltmuffe (16) axial zwischen der ersten Endlage und der zweiten Endlage in eine Neutralposition verschiebbar ist.

5. Gesamtheit nach mindestens einem der Ansprüche 1 bis 4,
**dadurch gekennzeichnet, dass** der Planetenträger (5) axialfest und drehfest mit dem Antriebsrad (5') verbunden ist.

6. Gesamtheit) nach mindestens einem der Ansprüche 1 bis 5,
**dadurch gekennzeichnet, dass** die Schaltmuffe (16) eine erste Verzahnung (16'), eine zweite Verzahnung (16") und eine dritte Verzahnung (16'") aufweist, wobei die Schaltmuffe (16) über die erste Verzahnung (16') drehfest mit dem Sonnenrad (7) koppelbar ist, wobei die Schaltmuffe (16) über die zweite Verzahnung (16")drehfest mit dem Planetenträger (5) koppelbar ist und wobei die Schaltmuffe (16) über die dritte Verzahnung (16'") drehfest mit der Eingangswelle (12) gekoppelt ist.

7. Gesamtheitnach mindestens einem der Ansprüche 1 bis 6,
**dadurch gekennzeichnet, dass** die Gesamtheit ein weiterhin ein Getriebegehäuse umfasst, wobei das Hohlrad (6) drehfest und axialfest mit dem Getriebegehäuse (9) gekoppelt ist.

8. Verteilergetriebe (1), umfassend mindestens eine Gesamtheit nach mindestens einem der Ansprüche 1 bis 7.

9. Verteilergetriebe (1) nach Anspruch 8,
**dadurch gekennzeichnet, dass** der mindestens eine Planetentrieb (2) über mindestens eine Zwischenwelle (3) in Triebverbindung mit einem Differentialgetriebe (4) des Verteilergetriebes (1) steht.

## Claims

1. Entity of a drive gear (5') and a two-stage planetary gear (2) for a transfer case (1) of a motor vehicle, the planetary gear (2) comprising an input shaft (12), a planet-gear carrier (5) having planet gears (8, 8'), a ring gear (6), a sun gear (7), and an axially displaceable shift collar (16), wherein the shift collar (16) is connected in a rotationally fixed manner to the input shaft (12), wherein the shift collar (16) in a first terminal position couples the input shaft (12) in a rotationally fixed manner to the sun gear (7), and in a second terminal position couples the input shaft (12) in a rotationally fixed manner to the planet-gear carrier (5), **characterized in that** the sun gear (7) is mounted so as to be rotatable on the input shaft (12), and the planetary gear (2) is disposed so as to be concentric within the drive gear (5).

2. Entity according to Claim 1, **characterized in that** the sun gear (7) has a first toothing (7') and axially spaced apart therefrom a second toothing (7"), wherein the sun gear (7) by way of the first toothing (7') permanently engages with the planet gears (8, 8'), and by way of the second toothing (7") is able to be coupled to the shift collar (16) .

3. Entity according to at least one of Claims 1 and 2, **characterized in that** the planet-gear carrier (5) has a toothing (5"), wherein the planet-gear carrier (5) by way of the toothing (5") is able to be coupled to the shift collar (16).

4. Entity according to at least one of Claims 2 and 3, **characterized in that** the shift collar (16) between the first terminal position and the second terminal position is axially displaceable to a neutral position.

5. Entity according to at least one of Claims 1 to 4, **characterized in that** the planet-gear carrier (5) is connected in an axially fixed and rotationally fixed manner to the drive gear (5').

6. Entity according to at least one of Claims 1 to 5, **characterized in that** the shift collar (16) has a first toothing (16'), a second toothing (16"), and a third toothing (16'"), wherein the shift collar (16) by way of the first toothing (16') is able to be coupled in a rotationally fixed manner to the sun gear (7), wherein the shift collar (16) by way of the second toothing (16") is able to be coupled in a rotationally fixed manner to the planet-gear carrier (5), and wherein the shift collar (16) by way of the third toothing (16'") is coupled in a rotationally fixed manner to the input shaft (12).

7. Entity according to at least one of Claims 1 to 6, **characterized in that** the entity furthermore comprises a gearbox housing, wherein the ring gear (6) is coupled in a rotationally fixed and axially fixed manner to the gearbox housing (9).

8. Transfer case (1), comprising at least one entity according to at least one of Claims 1 to 7.

9. Transfer case (1) according to Claim 8, **characterized in that** the at least one planetary gear (2) by way of at least one layshaft (3) is drive-connected to a differential gear (4) of the transfer case (1).

## Revendications

1. Ensemble constitué d'une roue d'entraînement (5') et d'un entraînement planétaire à deux étages (2) pour une boîte de transfert (1) d'un véhicule automobile, l'entraînement planétaire (2) comprenant :
un arbre d'entrée (12), un porte-satellites (5) avec des satellites (8, 8'), une couronne dentée (6), une roue solaire (7) et un manchon de commande déplaçable axialement (16), le manchon de commande (16) étant accouplé de manière solidaire en rotation à l'arbre d'entrée (12), le manchon de commande (16), dans une première position d'extrémité, accouplant l'arbre d'entrée (12) de manière solidaire en rotation à la roue solaire (7) et dans une deuxième position d'extrémité, accouplant l'arbre d'entrée (12) de manière solidaire en rotation au porte-satellites (5),
**caractérisé en ce que**
la roue solaire (7) est supportée de manière rotative sur l'arbre d'entrée (12) et l'entraînement planétaire (2) est disposé concentriquement à l'intérieur de la roue d'entraînement (5).

2. Ensemble selon la revendication 1,
**caractérisé en ce que** la roue solaire (7) présente une première denture (7') et une deuxième denture (7") espacée axialement de celle-ci, la roue solaire (7) étant en prise permanente par le biais de la première denture (7') avec les satellites (8, 8') et pouvant être accouplée au manchon de commande (16) par le biais de la deuxième denture (7").

3. Ensemble selon au moins l'une des revendications 1 et 2,
**caractérisé en ce que** le porte-satellites (5) présente une denture (5"), le porte-satellites (5) pouvant être accouplé par le biais de la denture (5") au manchon de commande (16).

4. Ensemble selon au moins l'une des revendications 2 et 3,
**caractérisé en ce que** le manchon de commande (16) peut être déplacé axialement entre la première position d'extrémité et la deuxième position d'extrémité dans une position neutre.

5. Ensemble selon au moins l'une des revendications 1 à 4,
**caractérisé en ce que** le porte-satellites (5) est connecté de manière fixée axialement et solidaire en rotation à la roue d'entraînement (5').

6. Ensemble selon au moins l'une des revendications 1 à 5,
**caractérisé en ce que** le manchon de commande (16) présente une première denture (16'), une deuxième denture (16") et une troisième denture (16'"), le manchon de commande (16) pouvant être accouplé par le biais de la première denture (16') de manière solidaire en rotation à la roue solaire (7), le manchon de commande (16) pouvant être accouplé par le biais de la deuxième denture (16") de manière solidaire en rotation au porte-satellites (5) et le manchon de commande (16) étant accouplé par le biais de la troisième denture (16'") de manière solidaire en rotation à l'arbre d'entrée (12).

7. Ensemble selon au moins l'une des revendications 1 à 6,
**caractérisé en ce que** l'ensemble comprend en outre un boîtier de transmission, la couronne dentée (6) étant accouplée de manière solidaire en rotation et fixée axialement au boîtier de transmission (9) .

8. Boîte de transfert (1) comprenant au moins un ensemble selon au moins l'une des revendications 1 à 7.

9. Boîte de transfert (1) selon la revendication 8, **caractérisée en ce que** l'au moins un entraînement planétaire (2) est en liaison d'entraînement par le biais d'au moins un arbre intermédiaire (3) avec un différentiel (4) de la boîte de transfert (1) .
